# FASCICULE DE BREVET EUROPEEN

(11) **EP 1 701 813 B1**
(45) Date de publication et mention de la délivrance du brevet: **21.05.2008**
(21) Numéro de dépôt: 05700300.6
(22) Date de dépôt: 04.01.2005
(51) Int. Cl.: B23B 51/04

(54) **ACCESSOIRE POUR SCIE CLOCHE ET SCIE CLOCHE EQUIPEE DE CET ACCESSOIRE**
VORRICHTUNG FÜR EINE LOCHSÄGE UND MIT DER VORRICHTUNG VERSEHENE LOCHSÄGE
DEVICE FOR A HOLE SAW AND A HOLE SAW PROVIDED WITH SAID DEVICE

(30) Priorité: 09.01.2004 FR 0400169
(43) Date de publication de la demande: 20.09.2006
(73) Titulaire: Sudan, Jean-Claude, 1616 Attalens (CH)
(72) Inventeur: Sudan, Jean-Claude, 1616 Attalens (CH)
(74) Mandataire: Nithardt, Roland
(86) Numéro de dépôt international: PCT/CH2005/000004
(87) Numéro de publication internationale: WO 2005/065873

(56) Documents cités:
- FR-A- 2 441 453
- US-A- 1 341 067
- US-A- 5 062 748
- PATENT ABSTRACTS OF JAPAN vol. 0101, no. 42 (M-481), 24 mai 1986 (1986-05-24) & JP 60 263608 A (MASATERU TAMURA; others: 01), 27 décembre 1985 (1985-12-27)

## Description

### Domaine technique

La présente invention concerne un accessoire pour une scie cloche utilisée pour pratiquer une ouverture circulaire dans un élément d'une construction, tel qu'une dalle ou une paroi ou similaire, cet accessoire étant agencé pour assurer la retenue dans la scie cloche du bloc circulaire découpé à travers ledit élément de la construction après le sciage et comprenant un support logé à l'intérieur de ladite scie cloche, ce support étant préalablement fixé audit élément de la construction, sensiblement au centre de l'ouverture circulaire à pratiquer au moyen de la scie cloche centrée sur ce support.

### Technique antérieure

Lorsqu'il s'agit de pratiquer une ouverture dans un élément porteur d'une construction, en particulier dans une dalle ou une paroi, on utilise souvent une scie cloche diamantée qui permet de scier un bloc dans ledit élément porteur et de réaliser une ouverture circulaire dont le diamètre correspond aux besoins et détermine le choix de la scie cloche à utiliser. Cette opération est très courante et satisfait la plupart des besoins, étant donné que le choix des diamètres des scies cloches disponibles sur le marché est très important Lorsque la dalle couvre un espace fermé, contenant éventuellement des équipements sensibles, ou lorsque cet espace est inaccessible ou difficilement accessible tel que par exemple une cage d'ascenseur, un local contenant des matériaux dangereux ou similaires, la découpe d'un bloc qui se détache de la dalle et tombe dans cet espace après l'opération de sciage présente un inconvénient majeur.

De nombreux systèmes ont été essayés pour assurer la retenue des blocs après le sciage d'une dalle, notamment la mise sous vide des scies cloches ou la mise en place de moyens de retenue qui nécessitent la transformation des scies cloches qui ont en principe une géométrie standard.

Ces systèmes compliqués et coûteux n'ont été acceptés ni par les utilisateurs ni par les fabricants de scies cloches parce qu'ils imposent tous la transformation des outils existants ou parce que ces systèmes donnent des résultats aléatoires peu satisfaisants.

On connaît également le dispositif objet de la publication japonaise JP 60 263608 au nom de Masateru Tamura, qui concerne un accessoire pour scie cloche. Cet accessoire est pourvu de bras de leviers dont le déclenchement est uniquement actionné par un ressort. Ces bras de leviers reposent sur des biellettes fixées sur un anneau en mouvement. Lors du déclenchement, ce mode de fixation va provoquer un mécanisme peu fiable et peu stable à cause du risque de torsion à l'intérieur de la scie. En outre, le fait que cet accessoire comporte uniquement un double ressort a pour conséquence d'avoir toujours le même poids accroché ou de devoir procéder à un réglage préalable des deux ressorts en fonction du poids approximatif de la partie qui va être découpée.

### Exposé de l'invention

Le but de la présente invention est de pallier ces inconvénients en réalisant un accessoire pour scie cloche qui permet, grâce à son mécanisme de retenue comportant un dispositif de freinage, de garantir le maintien du bloc découpé, quel que soit son poids, après le sciage dans l'élément porteur, cet accessoire étant simple, peu coûteux et fiable tout en s'adaptant à toutes les scies cloches existantes sur le marché et en pouvant s'adapter à tous les diamètres.

Ce but est atteint par un accessoire tel que décrit en préambule, caractérisé en ce que ledit support est un disque de centrage dont le diamètre est sensiblement égal au diamètre intérieur de la douille de la scie cloche, et en ce que ledit disque de centrage porte au moins une mâchoire pivotant entre une position de repos et une position de travail ainsi qu'un mécanisme d'actionnement de cette mâchoire, ce mécanisme d'actionnement étant agencé pour maintenir ladite mâchoire dans sa position de repos pendant le sciage dans l'élément de la construction et pour amener cette mâchoire dans sa position de travail après le sciage dudit bloc découpé dans ledit élément de la construction, et est pourvu d'un dispositif de freinage agencé pour ralentir la chute du bloc découpé après le sciage dans l'élément de la construction.

Selon un mode de réalisation avantageux, ladite mâchoire est portée par une colonne et est articulée sur un axe fixe de manière à basculer entre sa position de repos et sa position de travail.

Selon un mode de réalisation préféré, le disque de centrage est pourvu d'une ouverture centrale pour le passage d'une tige filetée dont une extrémité, dite extrémité inférieure, est engagée dans une cheville enfoncée dans un trou foré dans ledit élément de la construction et dont l'autre extrémité, dite extrémité supérieure, porte au moins un écrou de blocage du mécanisme d'actionnement de la mâchoire. Ce mode de construction permet de solidariser de manière simple et efficace le bloc après son découpage et la scie cloche.

Selon une forme de réalisation préférée, le mécanisme d'actionnement de la mâchoire comporte deux pièces annulaires parallèles entre elles, montées sur un manchon cylindrique coaxial à un élément tubulaire solidaire du disque de centrage, ces pièces annulaires étant agencées pour coopérer avec ladite mâchoire pour la basculer de la position de repos dans la position de travail et la maintenir dans une de ces positions.

Selon un mode de réalisation avantageux, l'écartement desdites pièces annulaires est tel que l'une des pièces annulaires correspond à la position de repos de ladite mâchoire et que l'autre pièce annulaire correspond à la position de travail de ladite mâchoire.

De façon particulièrement avantageuse, ladite mâchoire comporte, à une de ses extrémités, un ergot, cet ergot étant agencé pour coopérer avec lesdites pièces annulaires et, à son autre extrémité, des dents ou cannelures, ces dents ou cannelures d'accrochage étant agencées pour prendre appui contre l'intérieur de la douille cylindrique de la scie cloche.

L'accessoire comporte de préférence un ressort spiral en appui, d'une part, contre le disque de centrage et, d'autre part, contre l'une des pièces annulaires, pour maintenir cette dernière dans une position correspondant à la position de repos de la mâchoire.

Dans la forme de réalisation préférée, le dispositif de freinage comporte au moins un support sur lequel est montée une vis à bille.

La scie cloche selon l'invention, telle que définie en préambule, est caractérisée en ce que ledit accessoire comprend un support logé à l'intérieur de ladite scie cloche, ce support étant préalablement fixé audit élément de la construction, sensiblement au centre de l'ouverture circulaire à pratiquer au moyen de la scie cloche centrée sur ce support, ce support portant au moins une mâchoire pivotant entre une position de repos et une position de travail ainsi qu'un mécanisme d'actionnement de cette mâchoire, ce mécanisme d'actionnement étant agencé pour maintenir ladite mâchoire dans sa position de repos pendant le sciage dans l'élément de la construction et pour amener cette mâchoire dans sa position de travail après le sciage dudit bloc découpé dans ledit élément de la construction.

### Description sommaire des dessins

La présente invention et ses avantages apparaîtront mieux dans la description suivante d'une forme de réalisation préférée de l'invention, donnée à titre d'exemple non limitatif, en référence aux dessins annexés, dans lesquels:
la figure 1 représente une vue en élévation de la scie cloche équipée de l'accessoire selon l'invention pendant le sciage d'un élément porteur,
la figure 2 représente une vue en élévation de la scie cloche équipée de l'accessoire selon l'invention après le sciage d'un bloc dans l'élément porteur,
la figure 3 représente une vue partielle en élévation de l'accessoire selon l'invention, et
la figure 4 représente une vue partielle de dessus de l'accessoire selon l'invention.

### Meilleure manière de réaliser l'invention

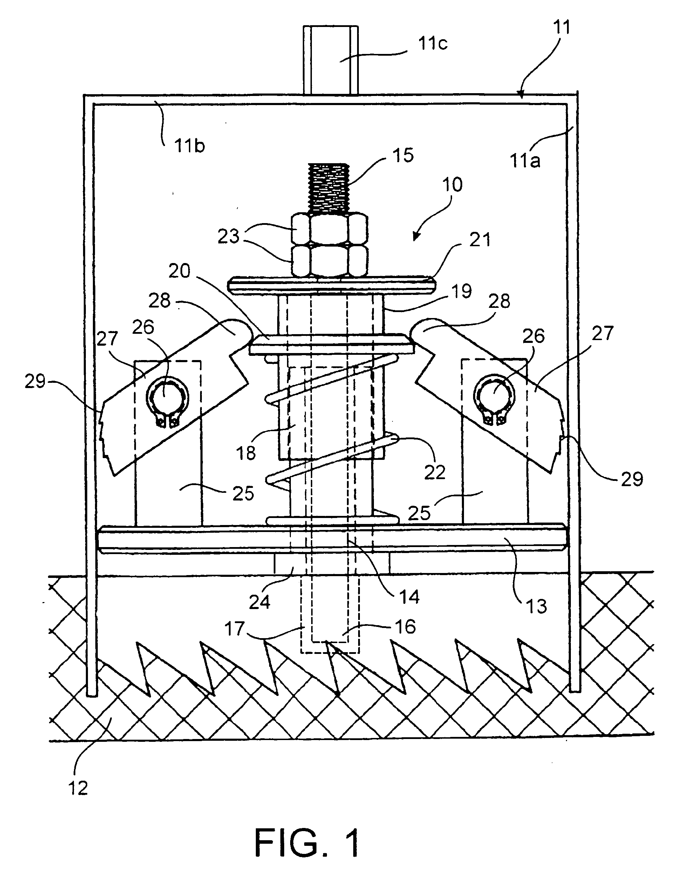

En référence à la figure 1, l'accessoire 10 est monté à l'intérieur d'une scie cloche 11 qui est utilisée pour scier un bloc circulaire en vue de pratiquer une ouverture, par exemple dans une dalle en béton 12 d'un bâtiment. La scie cloche, qui se compose d'une douille cylindrique 11 a fermée à son extrémité supérieure par une plaque circulaire 11 b, est équipée d'un manchon de fixation fileté 11c agencé pour la fixer sur l'axe d'un moteur d'entraînement (non représenté).

L'accessoire 10, logé à l'intérieur de la douille cylindrique 11a, comporte un disque de centrage 13 dont le diamètre est sensiblement égal au diamètre intérieur de cette douille. Ce disque de centrage 13 est pourvu d'une ouverture centrale 14 pour le passage d'une tige filetée 15 dont une extrémité, dite extrémité inférieure 16, est engagée dans une cheville 17 ayant été préalablement enfoncée dans un trou foré dans la dalle en béton 12, au centre de l'ouverture qui subsistera après retrait dudit bloc circulaire découpé. La tige filetée 15 traverse un élément tubulaire 18 solidaire du disque de centrage 13 et concentrique à ce dernier, de manière à pouvoir coulisser librement dans cet élément tubulaire qui est lui-même partiellement engagé dans un manchon cylindrique 19 coaxial à l'élément tubulaire 18 et qui porte une première pièce annulaire 20 et une seconde pièce annulaire 21, parallèles et écartées l'une de l'autre d'une distance prédéterminée. La première pièce annulaire 20, qui est solidaire de l'élément tubulaire 18, sert d'appui à un ressort spiral 22 qui est par ailleurs appuyé sur le disque de centrage 13. La seconde pièce annulaire 21 est en appui contre au moins un et de préférence deux écrous de blocage 23 vissés dans une position déterminée sur la tige filetée 15, plus exactement à l'extrémité dite supérieure de cette tige.

Une entretoise 24 sépare le disque de centrage 13 de la surface de la dalle de béton 12, pour éviter qu'il ne frotte contre cette surface s'il est entraîné en rotation au cours de l'opération de sciage.

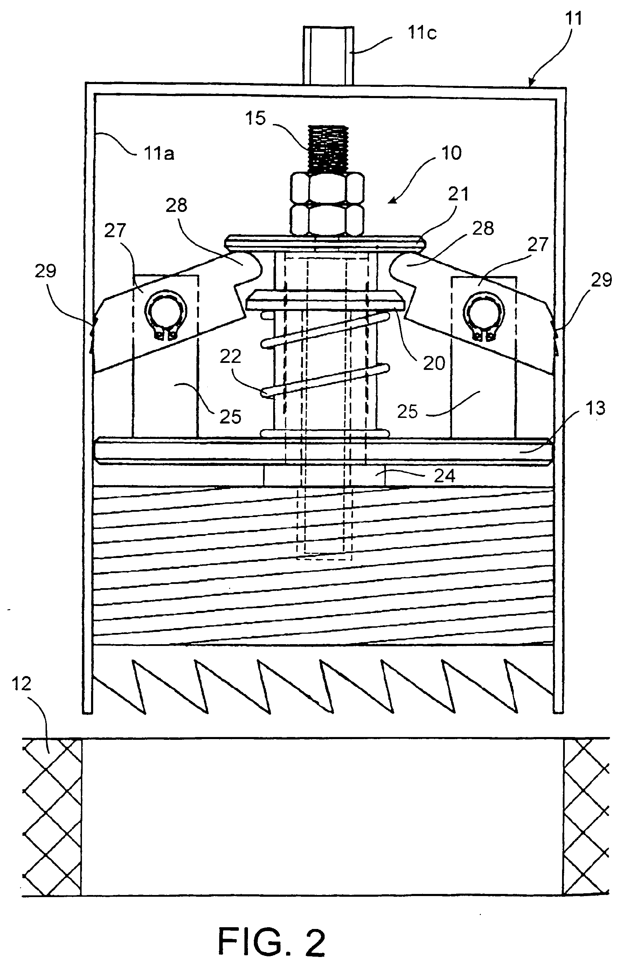

L'ensemble de ces composants constitue le mécanisme d'actionnement permettant de faire basculer des mâchoires 27 d'une position de repos, représentée par la figure 1, dans une position de travail, représentée par la figure 2, et de les maintenir en position.

A cet effet, le disque de centrage 13 sert également de support à au moins une et de préférence trois colonnes ou paires de colonnes 25, selon la construction représentée, parallèles entre elles deux à deux et portant chacune un axe de pivotement 26 sur lequel est articulée une mâchoire 27. Chacune de ces mâchoires 27 est montée sur l'axe de pivotement 26 et disposée entre les deux colonnes parallèles d'une paire de colonnes 25. Chaque mâchoire 27 est pourvue, à une de ses extrémités, d'un ergot 28 agencé pour coopérer avec les pièces annulaires 20 et 21 et, à son autre extrémité, de dents ou cannelures d'accrochage 29.

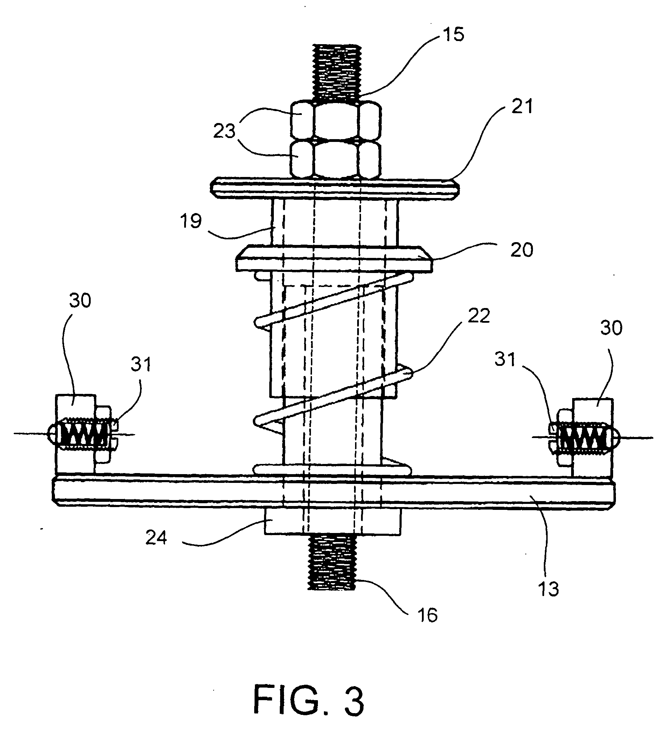

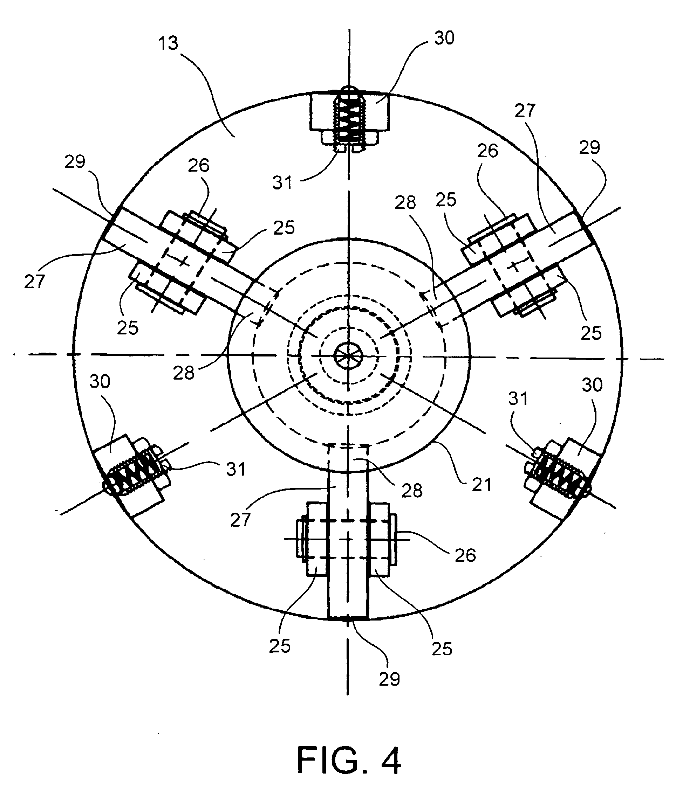

Comme le montre plus particulièrement les figures 3 et 4, le disque de centrage 13 est en outre équipé d'un dispositif de freinage composé, dans l'exemple représenté, de trois supports 30 sur lesquels sont montées respectivement trois vis à bille 31, réglables, dont le rôle sera expliqué ci-après.

L'accessoire 10 est mis en place à l'intérieur de la scie cloche 11 dans le but d'éviter que le bloc de béton scié dans la dalle 12 ne tombe à la fin de l'opération de sciage, mais reste pris à l'intérieur de la douille cylindrique 11 a. La scie cloche est tout à fait standard et l'opération de sciage s'effectue d'une façon habituelle, sans aucune précaution ou aucune préparation spéciale, si ce n'est la fixation de l'accessoire 10 dans la dalle 12 à l'aide d'une cheville 17, préalablement à la mise en place de la scie cloche par-dessus l'accessoire 10. A cet effet, on repère le centre de l'ouverture qui doit être pratiquée dans la dalle et on perce un trou borgne adapté au diamètre de la cheville. On visse ensuite l'extrémité de la tige filetée 15 dans la cheville 17, ce qui a pour effet de rendre solidaires l'accessoire et la dalle, ou plus exactement le bloc circulaire qui sera scié dans cette dalle. Les écrous de blocage 23 vissés sur la tige filetée 15 sont disposés de telle manière que le ressort spiral 22 soit comprimé et pousse la pièce annulaire 20 contre les ergots 28 des mâchoires 27, dans une position haute représentée par la figure 1, position dans laquelle les dents ou cannelures d'accrochage 29 ne sont pas en appui contre l'intérieur de la douille cylindrique 11a. Cette compression du ressort est possible grâce au fait que l'accessoire est rendu solidaire de la dalle au moyen de la cheville 17.

Au cours du sciage, les dents de la scie cloche pénètrent dans la dalle de béton 12, comme le montre la figure 1. La douille cylindrique 11 a est plus ou moins en appui contre la périphérie du disque de guidage 13. Au moment où la scie cloche traverse complètement la dalle, le bloc de béton découpé, entraîné par son propre poids, a tendance à descendre et à sortir de la douille cylindrique 11a. Ce mouvement, ralenti par le dispositif de freinage dont les billes 31 frottent sur la paroi latérale intérieure de la douille cylindrique 11 a, entraîne la tige filetée 15 et la pièce annulaire 21, dont le diamètre extérieur est supérieur à celui de la pièce annulaire 20. En se déplaçant vers le bas, elle prend appui sur les ergots 28 et fait basculer les mâchoires 27 dont les dents ou cannelures d'accrochage 29 prennent appui contre la surface intérieure de la douille cylindrique 11 a et bloquent l'accessoire 10 ainsi que le bloc scié à l'intérieur de la scie cloche. Le but recherché est atteint. La scie cloche peut être dégagée ainsi que le bloc scié qui pourra être retiré après démontage de la scie cloche de l'axe d'entraînement du moteur. Il suffit à cet effet de repousser le disque de guidage 13 à l'aide d'un outil allongé traversant le manchon de fixation fileté 11 c.

Ce dispositif est simple et efficace et s'adapte à toutes les scies cloches standards du marché sans aucune adaptation préalable. En outre son efficacité n'est pas liée au poids de l'élément découpé grâce à son double mécanisme de retenue formé d'une part par les mâchoires et d'autre part par le dispositif de freinage.

## Revendications

1. Accessoire pour une scie cloche utilisée pour pratiquer une ouverture circulaire dans un élément d'une construction (12), tel qu'une dalle ou une paroi ou similaire, cet accessoire (10) étant agencé pour assurer la retenue dans la scie cloche (11) du bloc circulaire découpé à travers ledit élément de la construction après le sciage et comprenant un support logé à l'intérieur de ladite scie cloche, ce support étant préalablement fixé audit élément de la construction, sensiblement au centre de l'ouverture circulaire à pratiquer au moyen de la scie cloche centrée sur ce support, **caractérisé en ce que** ledit support est un disque de centrage (13) dont le diamètre est sensiblement égal au diamètre intérieur de la douille (11a) de la scie cloche (11), et **en ce que** ledit disque de centrage (13) porte au moins une mâchoire (27) pivotant entre une position de repos et une position de travail ainsi qu'un mécanisme d'actionnement de cette mâchoire, ce mécanisme d'actionnement étant agencé pour maintenir ladite mâchoire dans sa position de repos pendant le sciage dans l'élément de la construction et pour amener cette mâchoire dans sa position de travail après le sciage dudit bloc découpé dans ledit élément de la construction (12), et est pourvu d'un dispositif de freinage agencé pour ralentir la chute du bloc découpé après le sciage dans l'élément de la construction.

2. Accessoire selon la revendication 1, **caractérisé en ce que** ladite mâchoire (27) est portée par une colonne (25) solidaire du disque de centrage (13) et est articulée sur un axe fixe (26) entre sa position de repos et sa position de travail.

3. Accessoire selon la revendication 1, **caractérisé en ce que** le disque de centrage (13) est pourvu d'une ouverture centrale (14) pour le passage d'une tige filetée (15) dont une extrémité, dite extrémité inférieure (16), est engagée dans une cheville (17) enfoncée dans un trou foré dans ledit élément de la construction (12) et dont l'autre extrémité, dite extrémité supérieure, porte au moins un écrou de blocage (23) du mécanisme d'actionnement de la mâchoire (27).

4. Accessoire selon la revendication 1, **caractérisé en ce que** le mécanisme d'actionnement de la mâchoire comporte deux pièces annulaires (20, 21) parallèles entre elles, montées sur un manchon cylindrique (19) coaxial à un élément tubulaire (18) solidaire du disque de centrage (13), ces pièces annulaires étant agencées pour coopérer avec ladite mâchoire (27) pour la basculer de la position de repos dans la position de travail et la maintenir dans une de ces positions.

5. Accessoire selon la revendication 4, **caractérisé en ce que** l'écartement desdites pièces annulaires (20, 21) est tel que l'une (20) des pièces annulaires correspond à la position de repos de ladite mâchoire (27) et que l'autre pièce annulaire (21) correspond à la position de travail de ladite mâchoire.

6. Accessoire selon la revendication 5, **caractérisé en ce que** ladite mâchoire (27) comporte, à une de ses extrémités, un ergot (28), cet ergot étant agencé pour coopérer avec lesdites pièces annulaires (20, 21) et, à son autre extrémité, des dents ou cannelures d'accrochage (29), ces dents ou cannelures d'accrochage (29) étant agencées pour prendre appui contre l'intérieur de la douille cylindrique (11a) de la scie cloche (11).

7. Accessoire selon la revendication 4, **caractérisé en ce qu'**il comporte un ressort spiral (22) en appui, d'une part, contre le disque de centrage (13) et, d'autre part, contre l'une (20) des pièces annulaires, pour maintenir cette dernière dans une position correspondant à la position de repos de la mâchoire (27).

8. Accessoire selon la revendication 1, **caractérisé en ce qu'**il comporte plusieurs mâchoires identiques (27) régulièrement espacées sur le disque de centrage (13), chacune de ces mâchoires ayant une position de repos et une position de travail identiques.

9. Accessoire selon la revendication 1, **caractérisé en ce que** le dispositif de freinage comporte au moins un support (30) sur lequel est montée une vis à bille (31).

## Claims

1. Accessory for a crown saw used to produce a circular opening in an element of a construction (12), such as a slab, wall or similar element, this accessory being equipped to ensure retention in the crown saw (11) of the cut circular section through the said element of construction after sawing and containing a support fixed within the said crown saw, this support having been previously fixed to the said element of construction, substantially in the centre of the circular opening to be made using the crown saw centred on this support, **characterised in that** the said support is a centring disc (13) the diameter of which is substantially equal to the interior diameter of the dowel (11a) in the crown saw (11) and **in that** the said centring disc (13) contains at least one jaw (27) that pivots between a rest position and a working position and a mechanism for activating that jaw, this activating mechanism being designed so as to hold the jaw in its rest position during sawing in the element of construction and to bring this jaw into its working position after sawing of the said cut section in the said element of construction (12), and is equipped with a braking device designed to slow the fall of the cut section after sawing in the element of construction.

2. Accessory according to Claim 1, **characterised in that** the said jaw (27) is borne by a column (25) forming a whole with the centring disc (13) and is attached to a fixed axle (26) between its resting position and working position.

3. Accessory according to Claim 1, **characterised in that** the centring disc (13) is equipped with a central opening (14) for passage of a threaded rod (15) of which one end, known as the lower end (16) is placed in a pin (17) sunk into a hole drilled in the said element of construction (12) and the other end, known as the upper end, bears at least one retaining nut (23) from the jaw (27) activation mechanism.

4. Accessory according to Claim 1, **characterised in that** the jaw activation mechanism contains two ring-shaped pieces (20, 21) parallel to each other and mounted on a cylindrical coupling (19) coaxial to a tubular element (18) that forms a whole with the centring disc (13), these ring-shaped pieces being equipped to work together with the jaw (27) by tipping it from the rest position to the working position and maintaining it in one of these positions.

5. Accessory according to Claim 4, **characterised in that** the distance between the ring-shaped pieces (20, 21) is such that one ring-shaped piece (20) corresponds to the rest position of the jaw (27) and the other ring-shaped piece (21) corresponds to the working position of the jaw.

6. Accessory according to Claim 5, **characterised in that** the jaw (27) contains a fin (28) at one of its ends, this fin being designed to work together with the ring-shaped pieces (20, 21), and with teeth or coupling grooves (29) at its other end, these teeth or coupling grooves being designed to be supported against the interior of the cylindrical dowel (11a) of the crown saw (11).

7. Accessory according to Claim 4, **characterised in that** it contains a spiral spring (22) supported against the centring disc (13) on one hand and against one of the ring-shaped pieces (20) on the other hand, in order to keep this piece in a position that corresponds to the rest position of the jaw (27).

8. Accessory according to Claim 1, **characterised in that** it contains a number of identical jaws (27) regularly spaced on the centring disc (13), each of these jaws having an identical rest position and working position.

9. Accessory according to Claim 1, **characterised in that** the braking device contains at least one support (30) on which a ball-screw spindle (31) is mounted.

## Patentansprüche

1. Zubehör für eine Lochsäge, die zur Ausführung einer kreisförmigen Öffnung in einem Element einer Konstruktion (12) wie zum Beispiel einer Bodenfliese oder einer Wand oder Ähnlichem verwendet wird, wobei das Zubehör (10) angeordnet ist, um das Zurückhalten des durch das Element der Konstruktion ausgeschnittenen kreisförmigen Blockes in der Lochsäge (11) nach dem Sägen sicherzustellen, und welches einen in dem Inneren der Lochsäge angeordneten Träger aufweist, wobei der Träger im Voraus an dem Element der Konstruktion befestigt ist, im wesentlichen im Mittelpunkt der kreisförmigen Öffnung, die mittels der auf diesen Träger zentrierten Lochsäge auszuführen ist,
**dadurch gekennzeichnet, dass**
der Träger eine Zentrierungsscheibe (13) ist, deren Durchmesser im wesentlichen gleich dem Innendurchmesser der Buchse (11a) der Lochsäge (11) ist, und dass die Zentrierungsscheibe (13) mindestens eine Klemmbacke (27) trägt, die sich zwischen einer Ruheposition und einer Arbeitsposition dreht, sowie einen Betätigungsmechanismus der Klemmbacke, wobei der Betätigungsmechanismus angeordnet ist, um die Klemmbacke während des Sägens in dem Konstruktionselement in ihrer Ruheposition zu halten und um die Klemmbacke nach dem Sägen des ausgeschnittenen Blockes in dem Element der Konstruktion (12) in ihre Arbeitsposition zu bringen, und mit einer Bremsvorrichtung versehen ist, die angeordnet ist, um den Fall des ausgeschnittenen Blockes zu verlangsamen.

2. Zubehör nach Anspruch 1,
**dadurch gekennzeichnet, dass**
die Klemmbacke (27) durch eine Säule (25) getragen ist, die fest mit der Zentrierungsscheibe (13) verbunden und auf einer feststehenden Achse (26) zwischen ihrer Ruheposition und ihrer Arbeitsposition gelenkig gelagert ist.

3. Zubehör nach Anspruch 1,
**dadurch gekennzeichnet, dass**
die Zentrierungsscheibe (13) mit einer mittigen Öffnung (14) für den Durchgang einer Gewindestange (15) versehen ist, deren eines äußerstes Ende, das untere Ende (16), mit einem Bolzen (17) in Eingriff steht, der in einem Loch versenkt ist, welches in das Element der Konstruktion (12) gebohrt ist, und deren anderes äußerstes Ende, das obere Ende, mindestens eine Arretierungsschraubenmutter (23) des Betätigungsmechanismus der Klemmbacke (27) trägt.

4. Zubehör nach Anspruch 1,
**dadurch gekennzeichnet, dass**
der Betätigungsmechanismus der Klemmbacke zwei ringförmige Teile (20,21) aufweist, die zueinander parallel sind, die auf einer zylindrischen Muffe (19) angebracht sind, die koaxial zu einem rohrförmigen Element (18) verläuft, welches fest mit der Zentrierungsscheibe (13) verbunden ist, wobei die ringförmigen Teile angeordnet sind, um mit der Klemmbacke (27) zusammenzuwirken, um sie von der Ruheposition in die Arbeitsposition zu kippen und sie in einer dieser Positionen zu halten.

5. Zubehör nach Anspruch 4,
**dadurch gekennzeichnet, dass**
der Abstand der ringförmigen Teile (20,21) derart ist, dass eines der ringförmigen Teile (20) der Ruheposition der Klemmbacke (27) entspricht, und dass das andere ringförmige Teil (21) der Arbeitsposition der Klemmbacke entspricht.

6. Zubehör nach Anspruch 5,
**dadurch gekennzeichnet, dass**
die Klemmbacke (27) an einem ihrer äußersten Enden einen Ansatz (28), der zum Zusammenwirken mit den ringförmigen Teilen (20,21) angeordnet ist, und an ihrem anderen äußersten Ende Zähne oder Einhängfurchen (29) aufweist, wobei die Zähne oder Einhängfurchen (29) angeordnet sind, um sich gegen das Innere der zylindrischen Buchse (11a) der Lochsäge (11) abzustützen.

7. Zubehör nach Anspruch 4,
**dadurch gekennzeichnet, dass**
es eine Spiralfeder (22) aufweist, die einerseits gegen die Zentrierungsscheibe (13) und andererseits gegen eines (20) der ringförmigen Teile anliegt, um dieses letztere in einer Position zu halten, die der Ruheposition der Klemmbacke (27) entspricht.

8. Zubehör nach Anspruch 1,
**dadurch gekennzeichnet, dass**
es mehrere identische Klemmbacken (27) aufweist, die auf der Zentrierungsscheibe (13) regelmäßig beabstandet sind, wobei jede der Klemmbacken eine identische Ruheposition und Arbeitsposition aufweist.

9. Zubehör nach Anspruch 1,
**dadurch gekennzeichnet, dass**
die Bremsvorrichtung mindestens einen Träger (30) aufweist, auf dem eine Spindel (31) angebracht ist.
